**Europäisches Patentamt**

**European Patent Office**

**Office européen des brevets**

(11) Veröffentlichungsnummer: **0 169 829**
**B1**

(12) # EUROPÄISCHE PATENTSCHRIFT

(45) Veröffentlichungstag der Patentschrift:
**20.04.88**

(51) Int. Cl.⁴: **F 16 H 7/08**

(21) Anmeldenummer: **85890121.8**

(22) Anmeldetag: **30.05.85**

(54) **Spannvorrichtung für einen Riementrieb.**

(30) Priorität: **24.07.84 AT 2385/84**

(43) Veröffentlichungstag der Anmeldung:
**29.01.86 Patentblatt 86/5**

(45) Bekanntmachung des Hinweises auf die Patenterteilung:
**20.04.88 Patentblatt 88/16**

(84) Benannte Vertragsstaaten:
**DE FR GB IT NL SE**

(56) Entgegenhaltungen:
**EP - A - 0 050 238**
**DE - C - 385 006**
**US - A - 1 523 676**
**US - A - 1 733 968**

(73) Patentinhaber: **Steyr-Daimler-Puch Aktiengesellschaft,
Kärntnerring 7, A-1010 Wien (AT)**

(72) Erfinder: **Valev, Assen, Dipl.-Ing. Dr.,
Schillerstrasse 15/3, A-4400 Steyr (AT)**

ACTORUM AG

## Beschreibung

Die Erfindung betrifft eine Spannvorrichtung gemäss dem Oberbegriff des Patentanspruches.

Es ist bereits aus der EP-A-50 238 eine solche Spannvorrichtung bekannt, die zum Einstellen eines Keilriementriebes eines Generators dient. Dabei ist durch einen Ansatz auf dem Träger des Generators und ein Langloch einer Spannlasche eine Klemmschraube erstreckt. Die Klemmschraube trägt eine Mutter sowie ein mit ihr verbundenes Ritzel, das mit einer Zahnstange der Spannlasche im Eingriff steht. Bei gelöster Mutter werden bei Verdrehung der Klemmschraube samt dem Ritzel der Träger samt Spannrolle für den Keilriementrieb und die Spannlasche relativ zueinander verschoben und dadurch die Spannung des Keilriementriebes eingestellt. Danach werden die beiden Teile durch Anziehen der Mutter geklemmt, wobei die Klemmschraube ebenfalls verdreht und über das Ritzel die beiden Teile nochmals relativ zueinander verschoben werden. Diese nochmalige Verdrehung der Klemmschraube erfolgt deshalb, weil die Ebene der Drehrichtung der Mutter parallel zur Ebene verläuft, in der das Ritzel und die Zahnstange liegen.

Demnach liegt der Erfindung die Aufgabe zugrunde, eine Spannvorrichtung der eingangs geschilderten Art weiter zu entwickeln, die eine mechanische Verdrehung des Trägers samt Spannrolle bei gelockerter Klemmschraube in eine Stellung gewährleistet, die auch beim Festziehen der Klemmschraube unverändert bleibt.

Die Erfindung löst die gestellte Aufgabe durch die Merkmale gemäss dem Kennzeichen des Patentanspruches.

Da die Klemmschraube als Schnecke in das feststehende Schneckenrad eingreift, kann durch das Verdrehen der Klemmschraube der Träger zum Spannen des Riemens feinfühlig verschwenkt werden. Zugleich aber erfüllt die Klemmschraube die Funktion der Trägerfeststellung, sobald nämlich der geschlitzte Ring mit Hilfe der Klemmschraube zusammengezogen wird. Die Bedienung ist einfach, da zur Verstellung bzw. zum Verschwenken des Trägers nur die Mutter der Klemmschraube gelockert und dann die Klemmschraube verdreht zu werden braucht, wobei sich durch das Ineinandergreifen von Klemmschraube und Schneckenrad die gewünschte Feineinstellung erzielen lässt, und zwar in einem sehr grossen Schwenkbereich. Ist die gewünschte Träger- bzw. Ringschwenkstellung erreicht, so wird die Mutter wieder angezogen, wobei diese Betätigungen von Klemmschraube und Mutter parallel zur Ebene des Riementriebes durchgeführt werden können, so dass es keine Rolle spielt, wenn praktisch der ganze von der Stirnfläche des Schneckenrades bestimmte Raum verbaut wird. Der Träger bzw. Klemmring bedarf auch keiner besonderen axialen Festlegung, da diese bereits durch den Eingriff der Klemmschraube in die Schnecke erreicht ist. Die Herstellung des Schneckenrades erhöht kaum den technischen Aufwand, weil das Radprofil einfach nach dem Prinzip des Rändelns bei gleichzeitigem Abwälzen mit Hilfe eines üblichen Gewindebohrers hergestellt werden kann.

In der Zeichnung ist der Erfindungsgegenstand in einem Ausführungsbeispiel dargestellt, und zwar zeigen

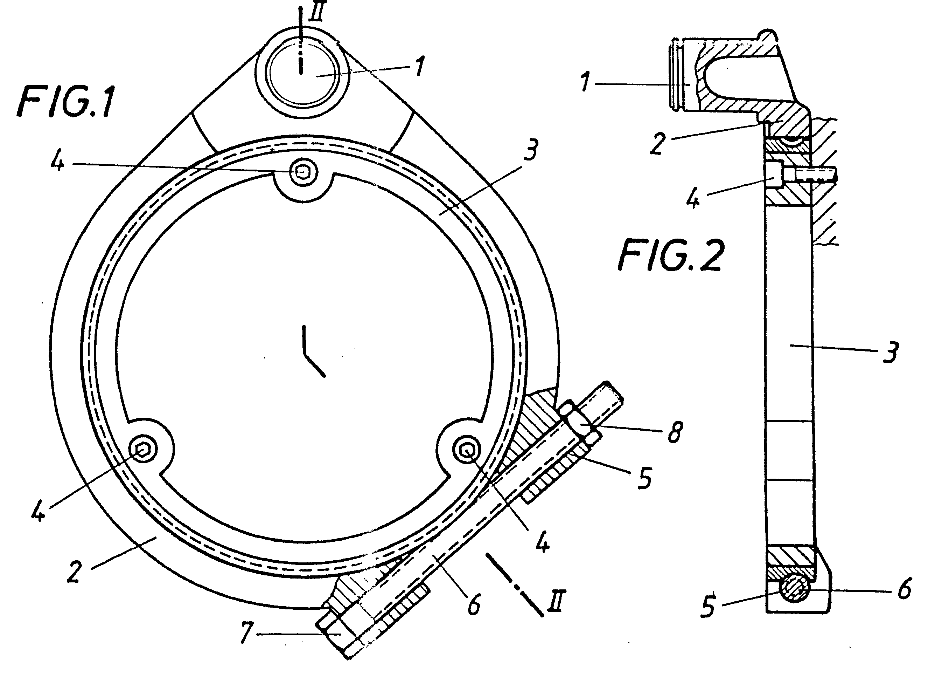

Fig. 1 eine Spannvorrichtung für einen Riementrieb in Ansicht und

Fig. 2 einen Schnitt nach der Linie II-II der Fig. 1.

Die nicht dargestellte Spannrolle für den Riemen eines Riementriebes ist auf dem Lagerzapfen 1 eines Trägers 2 angeordnet, der als geschlitzter Ring ausgebildet ist. Der Träger bzw. Ring 2 umschliesst ein Schneckenrad oder einen Schneckenradkranz 3, das bzw. der an irgendeinem geeigneten Konstruktionsteil mit Schrauben 4 befestigt ist. Im Träger bzw. Ring 2 ist eine glatte, tangential zum Schneckenrad bzw. -radkranz 3 verlaufende Bohrung 5 vorgesehen, in der eine Klemmschraube 6 gelagert ist, die einerseits einen Schraubenkopf 7 und anderseits eine Mutter 8 trägt. Im Schlitzbereich des Ringes 2 greift die Klemmschraube 6 als Schnecke in das Profil des Schneckenrades bzw. -radkranzes 3 ein, so dass mit Hilfe der Klemmschraube 6 einerseits der Träger 2 um das Schneckenrad bzw. den Schneckenradkranz 3 verdreht, anderseits durch Anziehen der Mutter 8 in der gewünschten Stellung fixiert werden kann.

## Patentanspruch

Spannvorrichtung für einen Riementrieb mit einer auf einem verdrehbaren und feststellbaren Träger (2) gelagerten Spannrolle, bei der der Träger über eine mit einem Kopf (7) und einer Mutter (8) versehene Klemmschraube (6) feststellbar ist, wobei der Klemmschraube ein Verzahnungsabschnitt zugeordnet ist, der mit einer feststehenden und angepassten Gegenverzahnung derart in Kämmeingriff steht, dass bei gelöster Klemmschraube durch deren Verdrehen ein Verdrehen des Trägers bewirkt wird, dadurch gekennzeichnet, dass der Träger ein geschlitzter Ring (2) ist, der die als Schneckenrad (3) ausgebildete feststehende Gegenverzahnung umschliesst und der im Schlitzbereich eine glatte Bohrung (5) aufweist, in der die mit einem Schneckenabschnitt versehene Klemmschraube (6) gelagert ist.

## Claim

A tensioner for a belt drive, comprising a tensioning roller that is movably mounted on a carrier (2), which is rotatable and adapted to be fixed in position, wherein the carrier is adapted to be fixed in position by means of a clamp screw (6), which is provided with a head (7) and a nut (8) and with which a toothed section is associated, which meshes with a mating countertoothing in such a manner that the clamp screw when loosened can be rotated to rotate the carrier, characterized in that the carrier is a slotted ring (2), which surrounds the stationary countertoothing, which consists of a worm wheel, and the slotted ring has adjacent to the slot a smooth bore (5), in which the clamp screw (6) is movably mounted, which is provided with a worm section.

## Revendication

Dispositif tendeur pour une courroie de transmission avec un galet tendeur monté sur un support (2) pouvant être tourné et immobilisé, dans lequel le support est immobilisable par une vis de serrage (6) pourvue d'une tête (7) et d'un écrou (8), la vis de serrage étant prévue avec un tronçon denté en prise avec une denture antagoniste fixe et adaptée, avec lequel à la suite de la libération de la vis de serrage et par la rotation de celle-ci, une rotation du support est produite, caractérisé en ce que le support est un anneau fendu (2) qui entoure la denture antagoniste fixe constituée par une roue dentée pour vis sans fin (3), et qui présente dans la zone de la fente un trou alésé lisse (5) dans lequel est guidée en rotation une vis de serrage (6) pourvue d'un tronçon à denture de vis sans fin.

FIG.1

FIG.2

0 169 829